# EUROPEAN PATENT APPLICATION

(11) **EP 2 963 311 A2**
(43) Date of publication of application: **06.01.2016**
(21) Application number: 15173847.3
(22) Date of filing: 25.06.2015
(51) Int. Cl.: F16F 15/123, F16F 15/12

(54) **DAMPER DEVICE**

(30) Priority: 27.06.2014 JP 2014132283; 20.04.2015 JP 2015085956
(71) Applicant: Toyota Jidosha Kabushiki Kaisha, Toyota-shi, Aichi-ken 471-8571 (JP)
(72) Inventor: KIMURA, Motoaki, TOYOTA-SHI, AICHI-KEN, 471-8571 (JP); OTA, Masayoshi, TOYOTA-SHI, AICHI-KEN, 471-8571 (JP)
(74) Representative: Intès, Didier Gérard André

(57) **Abstract**

A damper device includes an input-side tubular member (30), an output-side tubular member (50), and an intermediate tubular member (40). The tubular members (30, 40, 50) have different diameter dimensions. The tubular members (30, 40, 50) are disposed such that the tubular member with a smaller diameter dimension is inserted into the tubular member with a larger diameter dimension, so that the spring abutment portion (42) of the intermediate tubular member (40) is placed between the spring abutment portion (34) of the input-side tubular member (30) and the spring abutment portion (54) of the output-side tubular member (50) in a circumferential direction of the tubular members (30,40,50). A damper spring (70, 80) is disposed in each spring arrangement space (90) formed between the spring abutment portion (42) of the intermediate tubular member (40) and those spring abutment portions (34, 54) of the other tubular members (30, 50) which are adjacent to the spring abutment portion (42) of the intermediate tubular member (40) in the circumferential direction.

## Description

### BACKGROUND OF THE INVENTION

### 1. Field of the Invention

The present invention relates to a damper device that absorbs fluctuations in a torque transmitted between an input-side rotational member and an output-side rotational member.

### 2. Description of Related Art

A power transmission system of an automobile is provided with a damper device that absorbs fluctuations in a torque transmitted from a drive source such as an engine toward a transmission. In a case of an automobile provided with a manually shifted transmission, for example, the damper device is generally incorporated into a clutch device.

Japanese Patent Application Publication No. 61-286616 (JP 61-286616 A) describes a series-spring damper device configured such that an intermediate plate is disposed between a disc plate of a clutch device and a hub to which an input shaft of a manually shifted transmission is connected, and respective coil springs are provided between the disc plate and the intermediate plate and between the intermediate plate and the hub. That is, the disc plate, the intermediate plate, and the hub are disposed sequentially in a direction along an axial center of the damper device.

### SUMMARY OF THE INVENTION

In the meantime, the configuration of JP 61-286616 A in which the disc plate, the intermediate plate, and the hub are disposed sequentially in the direction along the axial center of the damper device has such a tendency that a linear dimension in the direction along the axial center of the damper device becomes long. Particularly, this tendency is markedly shown in a case where thickness dimensions of the intermediate plate and the hub are set to be large in consideration that a transmission torque becomes large (a load acting on the intermediate plate and the hub becomes large). Because of this, it is necessary for the linear dimension in the direction along the axial center to be long as a disposition space for the damper device.

The present invention provides a damper device that is able to shorten a linear dimension in a direction along its axial center as a disposition space for the damper device.

A damper device according to an aspect of the present invention is a damper device configured to absorb fluctuations in torque transmitted between an input-side rotational member and an output-side rotational member, and includes: an input-side tubular member formed in a tubular shape, connected to the input-side rotational member, and provided with spring abutment portions formed at plurality of places in a circumferential direction; an output-side tubular member formed in a tubular shape, connected to the output-side rotational member, and provided with spring abutment portions formed at a plurality of places in the circumferential direction; and an intermediate tubular member formed in a tubular shape and provided with spring abutment portions formed at a plurality of places in the circumferential direction. The tubular members have different diameter dimensions. The tubular members are disposed such that the tubular member with a smaller diameter dimension is inserted into the tubular member with a larger diameter dimension, so that the spring abutment portion of the intermediate tubular member is placed between the spring abutment portion of the input-side tubular member and the spring abutment portion of the output-side tubular member in the circumferential direction of the tubular members. A damper spring is disposed in each spring arrangement space formed between the spring abutment portion of the intermediate tubular member and those spring abutment portions of the other tubular members which are adjacent to the spring abutment portion of the intermediate tubular member in the circumferential direction.

Since tubular members for transmitting a torque, such as the input-side tubular member, the output-side tubular member, and the intermediate tubular member are disposed over a radial direction as such, the damper device according to the present invention can shorten a linear dimension in a direction along an axial center thereof, in comparison with a configuration in which members for transmitting a torque are disposed sequentially in the direction along the axial center. This makes it possible to shorten the linear dimension in the direction along the axial center as a disposition space for the damper device.

Further, in the present aspect, in a case where a torque is transmitted from the input-side rotational member to the output-side rotational member, for example, the torque is transmitted sequentially in an order of the input-side tubular member, a damper spring disposed between the spring abutment portion of the input-side tubular member and the spring abutment portion of the intermediate tubular member, the intermediate tubular member, a damper spring disposed between the spring abutment portion of the intermediate tubular member and the spring abutment portion of the output-side tubular member, and the output-side tubular member. That is, the damper springs are disposed in series in a torque transmission direction. Accordingly, a relative torsion angle between the input-side rotational member and the output-side rotational member can be taken up to a value of a sum of respective deformable amounts of the damper springs thus disposed in series, thereby making it possible to obtain a relatively large torsion angle. As such, in the present aspect, in the damper device (so-called series-spring damper device) that can obtain a large torsion angle and successfully obtain a damping characteristic with respective to torque fluctuations, it is possible to shorten the linear dimension in the direction along the axial center as a disposition space for the damper device.

Further, the input-side tubular member, the intermediate tubular member, and the output-side tubular member may be decreased in diameter dimension sequentially in this order, and the intermediate tubular member may be inserted into the input-side tubular member and the output-side tubular member may be inserted into the intermediate tubular member. Further, the input-side rotational member may be a member having a diameter larger than that of the input-side tubular member, and the output-side rotational member may be an input shaft of a transmission.

According to this configuration, those members are able to be arranged sequentially in an order from a member with a larger diameter to a member with a smaller diameter along a torque transmission direction from the input-side rotational member toward the output-side rotational member, thereby making it possible to restrain upsizing in a radial direction.

In the aspect of the present invention, the tubular members for transmitting a torque are disposed such that the tubular member with a smaller diameter dimension is inserted into the tubular member with a larger diameter dimension. This makes it possible to shorten their linear dimensions in a direction along an axial center of the damper device, thereby making it possible to shorten a linear dimension in the direction along the axial center as a disposition space for the damper device.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is an exploded perspective view of a clutch disc and a damper device according to an embodiment;
FIG. 2 is a view of the clutch disc and the damper device according to the embodiment, when viewed from a direction along an axial center;
FIG. 3 is a perspective view illustrating a state where respective tubular members of the damper device according to the embodiment are combined;
FIG. 4 is a partial developed view of the tubular members and illustrates a state where a torque does not act on the damper device in the embodiment;
FIG. 5 is a partial developed view of the tubular members and illustrates a state where a torque acts on the damper device in the embodiment; and
FIG. 6 is a view to describe abutment positions of the tubular members to a spring in the embodiment.

### DETAILED DESCRIPTION OF EMBODIMENTS

An embodiment of the present invention is described below with reference to the drawings. The present embodiment describes a case where the present invention is applied to a series-spring damper device incorporated in a clutch device (a clutch device disposed between an engine and a manually shifted transmission in a power transmission system of an automobile).

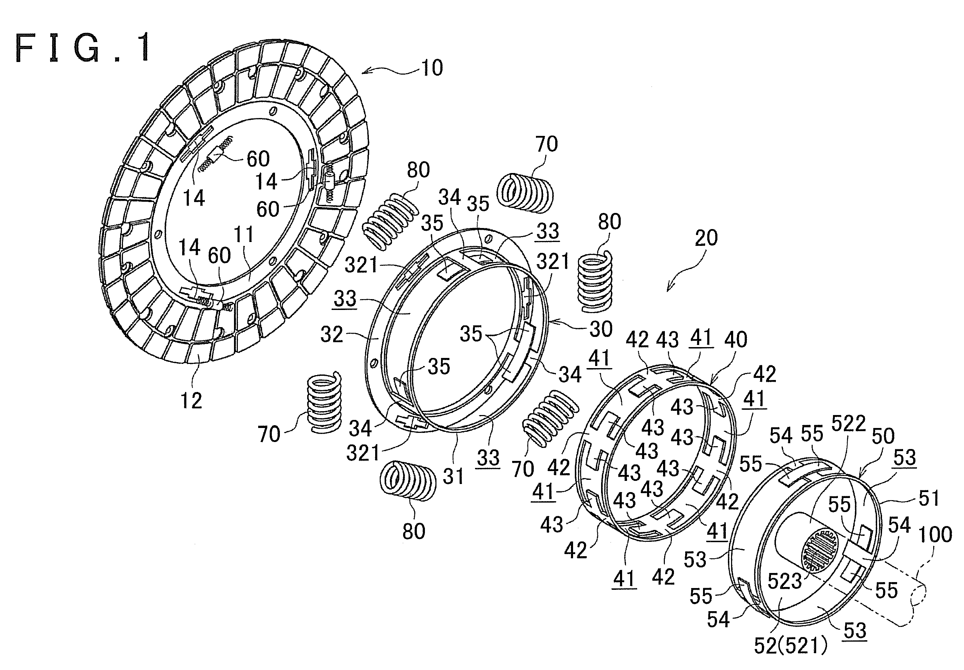

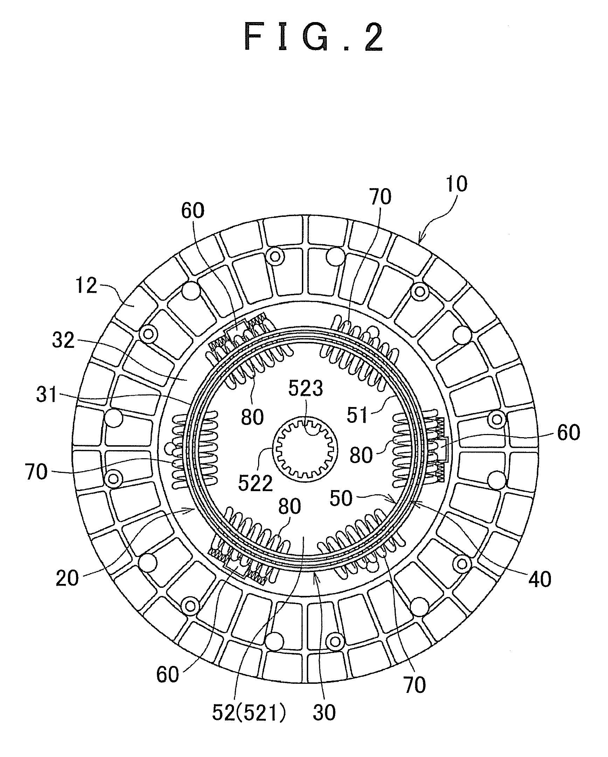

FIG. 1 is an exploded perspective view of a clutch disc 10 and a damper device 20 according to the embodiment. FIG. 2 is a view of the clutch disc 10 and the damper device 20, when viewed from a direction along an axial center.

As illustrated in these figures, the damper device 20 according to the present embodiment includes an input-side tubular member 30, an intermediate tubular member 40, an output-side tubular member 50, dynamic dampers 60, first main damper springs 70, and second main damper springs 80. The following describes the clutch disc 10 and components 30 to 80 of the damper device 20.

The clutch disc 10 is an example of an input-side rotational member in the present invention, and includes a disc plate 11 and a clutch facing 12.

The disc plate 11 is made of a metal toric plate material. Openings 14 for accommodating respective dynamic dampers 60 are formed at three places of the disc plate 11 in its circumferential direction. The openings 14, 14, 14 are provided at respective positions separated at an angle interval of approximately 120° in the circumferential direction of the disc plate 11.

The clutch facing 12 is provided between a pressure plate and a flywheel constituting a clutch device (not shown). When the clutch facing 12 receives a pressing force from the pressure plate toward the flywheel, the clutch facing 12 is sandwiched between the pressure plate and the flywheel. Hereby, a torque from the engine is transmitted to the clutch facing 12 and the disc plate 11 via the flywheel, and then, the torque is transmitted from the disc plate 11 to an input shaft 100 (an example of an output-side rotational member in the present invention; see a virtual line in FIG. 1) of a transmission via the damper device 20. Further, when the pressing force from the pressure plate is released, the clutch facing 12 is distanced from the flywheel, so that the transmission of the torque to the clutch facing 12 is released. This results in that the transmission of the torque toward the input shaft 100 of the transmission is also released. Note that a configuration to change the pressing force from the pressure plate (a configuration to change the pressing force from the pressure plate according to a stepping operation of a clutch pedal by a driver) is well-known, so a detailed description thereof is omitted here.

The input-side tubular member 30 includes: a tubular-member body portion 31 formed in a cylindrical shape; and a toric flange portion 32 extending toward an outer peripheral side from an edge (an edge on a clutch-disc-10 side) of the tubular-member body portion 31 on one side in a direction along its axial center.

Generally rectangular openings 33, 33, 33 are formed at three places in the tubular-member body portion 31 over a circumferential direction. An opening length of the openings 33 over the circumferential direction is set within an angular range of approximately 100° in the circumferential direction of the tubular-member body portion 31. Further, a linear dimension of the openings 33 in the direction along the axial center of the tubular-member body portion 31 is set to be slightly larger than respective outside diameter dimensions of the main damper springs 70, 80.

Regions between the openings 33, 33, 33, that is, regions where no opening is formed serve as spring abutment portions 34, 34, 34 with which the main damper springs 70, 80 abut. Those edges of each of the spring abutment portions 34, 34, 34 which are placed on both sides thereof in the circumferential direction of the tubular-member body portion 31 (i.e., respective edges with which the main damper springs 70, 80 abut) extend in a direction along an axial center of the input-side tubular member 30. Further, a length of the spring abutment portions 34 over the circumferential direction is set within an angular range of approximately 20° in the circumferential direction of the tubular-member body portion 31. That is, the openings 33 and the spring abutment portions 34 are provided alternately in the tubular-member body portion 31 over the circumferential direction. Note that the aforementioned values are not limited in particular.

Each of the spring abutment portions 34 is provided with a spring support projection 35. The spring support projection 35 is made of a rectangular plate material projecting from an inner peripheral surface of the spring abutment portion 34 in the circumferential direction. That is, an inner peripheral surface of the spring support projection 35 is placed on an inner peripheral side relative to the inner peripheral surface of the spring abutment portion 34 just by a plate thickness of the spring support projection 35. When the spring support projection 35 is inserted into an internal space of the main damper spring 70, 80, detachment of the main damper spring 70, 80 is prevented.

Openings 321 for accommodating respective dynamic dampers 60 are formed at three places of the flange portion 32 in its circumferential direction. The openings 321, 321, 321 are formed at respective positions separated at an angle interval of approximately 120° in the circumferential direction of the flange portion 32, which respective positions correspond to the openings 14, 14, 14 formed in the disc plate 11. The flange portion 32 is superposed on the disc plate 11 and these members are fixed by caulking with pins (not shown) or fastened with screws, so that the clutch disc 10 and the input-side tubular member 30 are connected to each other so as to be rotatable integrally. The dynamic dampers 60 are accommodated inside the openings 321 of the flange portion 32 and the openings 14 of the disc plate 11.

As such, the input-side tubular member 30 is formed in a tubular shape, connected to the clutch disc 10, and provided with the spring abutment portions 34, 34, 34 at a plurality of places in the circumferential direction.

The intermediate tubular member 40 is formed in a cylindrical shape with an outside diameter dimension that is set slightly smaller than an inside diameter dimension of the input-side tubular member 30. Further, a dimension of the intermediate tubular member 40 in an axial-center direction is generally the same as a dimension of input-side tubular member 30 in the axial-center direction.

Openings 41, 41, ... are formed at six places in the intermediate tubular member 40 over a circumferential direction thereof. An opening length of the openings 41 over the circumferential direction is set within an angular range of approximately 40° in the circumferential direction of the intermediate tubular member 40. Further, a linear dimension of the openings 41 in a direction along an axial center of the intermediate tubular member 40 is set to be slightly larger than respective outside diameter dimensions of the main damper springs 70, 80.

Regions between the openings 41, 41, ..., that is, regions where no opening is formed serve as spring abutment portions 42, 42, ... with which the main damper springs 70, 80 abut. Those edges of each of the spring abutment portions 42, 42, ... which are placed on both sides thereof in the circumferential direction of the intermediate tubular member 40 (i.e., respective edges with which the main damper springs 70, 80 abut) extend in a direction along the axial center of the intermediate tubular member 40. Further, a length of the spring abutment portions 42 over the circumferential direction is set within an angular range of approximately 20° in the circumferential direction of the intermediate tubular member 40. That is, the openings 41 and the spring abutment portions 42 are provided alternately in the intermediate tubular member 40 over the circumferential direction. Note that the aforementioned values are also not limited in particular.

Each of the spring abutment portions 42 is provided with a spring support projection 43. The spring support projection 43 is made of a rectangular plate material projecting from an edge of the spring abutment portion 42 in the circumferential direction. When the spring support projection 43 is inserted into the internal space of the main damper spring 70, 80, detachment of the main damper spring 70, 80 is prevented.

Thus, the intermediate tubular member 40 is formed in a tubular shape, and is provided with the spring abutment portions 42, 42 ... at a plurality of places in the circumferential direction.

The output-side tubular member 50 is formed in a cylindrical shape with an outside diameter dimension that is set to be slightly smaller than an inside diameter dimension of the intermediate tubular member 40. Further, a dimension of the output-side tubular member 50 in its axial-center direction is generally the same as a dimension of the intermediate tubular member 40 in its axial-center direction and a dimension of the input-side tubular member 30 in its axial-center direction.

The output-side tubular member 50 includes a tubular-member body portion 51 formed in a cylindrical shape, and a clutch hub portion 52.

Generally rectangular openings 53, 53, 53 are formed at three places in the tubular-member body portion 51 over a circumferential direction thereof. An opening length of the openings 53 over the circumferential direction is set within an angular range of approximately 100° in the circumferential direction of the tubular-member body portion 51. Further, a linear dimension of the openings 53 in a direction along an axial center of the tubular-member body portion 51 is set to be slightly larger than respective outside diameter dimensions of the main damper springs 70,80.

Regions between the openings 53, 53, 53, that is, regions where no opening is formed serve as spring abutment portions 54, 54, 54 with which the main damper springs 70, 80 abut. Those edges of each of the spring abutment portions 54, 54, 54 which are placed on both sides thereof in the circumferential direction of the tubular-member body portion 51 (i.e., respective edges with which the main damper springs 70, 80 abut) extend in a direction along an axial center of the output-side tubular member 50. Further, a length of the spring abutment portions 54 over the circumferential direction is set within an angular range of approximately 20° in the circumferential direction of the tubular-member body portion 51. That is, the openings 53 and the spring abutment portions 54 are provided alternately in the tubular-member body portion 51 over the circumferential direction. Note that the aforementioned values are also not limited in particular.

Each of the spring abutment portions 54 is provided with a spring support projection 55. The spring support projection 55 is made of a rectangular plate material projecting from an outer peripheral surface of the spring abutment portion 54 in the circumferential direction. That is, an outer peripheral surface of the spring support projection 55 is placed on an outer peripheral side relative to the outer peripheral surface of the spring abutment portion 54 just by a plate thickness of the spring support projection 55. When the spring support projection 55 is inserted into the internal space of the main damper spring 70, 80, detachment of the main damper spring 70, 80 is prevented.

The clutch hub portion 52 includes: a clutch hub plate 521 extending toward an inner peripheral side from an edge (an edge on a clutch-disc-10 side) of the tubular-member body portion 51 on one side in the direction along the axial center thereof; and a cylindrical hub main body 522 joined to a central part of the clutch hub plate 521. Splines 523 to which the input shaft 100 of the transmission is fitted are formed on an inner peripheral surface of the hub main body 522.

As such, the output-side tubular member 50 is formed in a tubular shape, connected to the input shaft 100 of the transmission, and provided with the spring abutment portions 54, 54, 54 at a plurality of places in the circumferential direction.

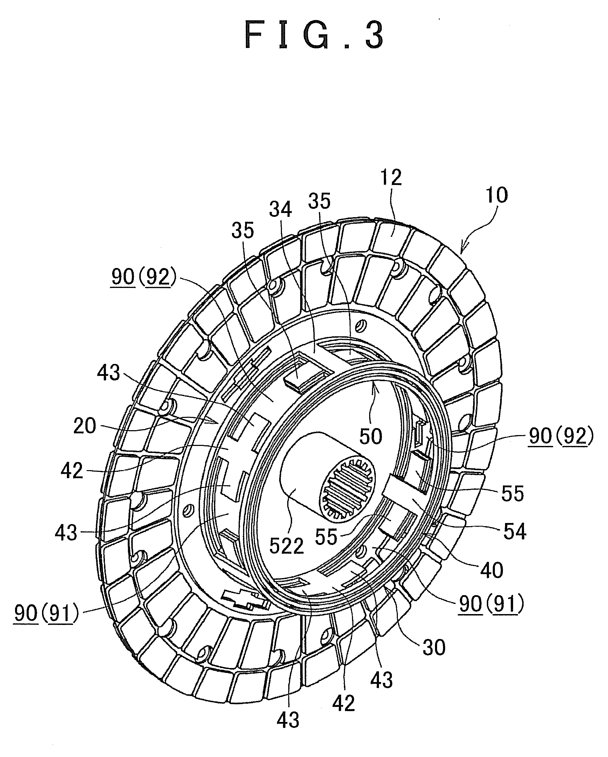

FIG. 3 is a perspective view illustrating a state where the input-side tubular member 30, the intermediate tubular member 40, and the output-side tubular member 50 are combined. As described above, the outside diameter dimension of the intermediate tubular member 40 is set to be slightly smaller than the inside diameter dimension of the input-side tubular member 30. Further, the outside diameter dimension of the output-side tubular member 50 is set to be slightly smaller than the inside diameter dimension of the intermediate tubular member 40. The intermediate tubular member 40 is inserted into an internal space of the input-side tubular member 30, and the output-side tubular member 50 is inserted into an internal space of the intermediate tubular member 40. Hereby, these tubular members are combined so as to overlap with each other coaxially and radially.

In a state where these tubular members 30, 40, 50 are combined as such, spring arrangement spaces 90, 90, ... are formed by the openings 33, 41, 53 and the spring abutment portions 34, 42, 54 formed in respective tubular members 30, 40, 50.

More specifically, in a state where the tubular members 30, 40, 50 are combined, a circumferential position of the spring abutment portion 34 of the input-side tubular member 30 accords with a circumferential position of the spring abutment portion 54 of the output-side tubular member 50. Further, the spring abutment portions 42 of the intermediate tubular member 40 include: spring abutment portions 42 that accord with respective circumferential positions of the spring abutment portions 34 of the input-side tubular member 30 and the spring abutment portions 54 of the output-side tubular member 50; and spring abutment portions 42 placed at intermediate positions between the spring abutment portions 34, 54 (intermediate positions in the circumferential direction). Spaces formed between the spring abutment portions 42 placed at the intermediate positions and the other spring abutment portions 34, 42, 54 are formed as spring arrangement spaces 90, 90, .... Hereby, in the present embodiment, the spring arrangement spaces 90, 90, ... are formed at six places over the circumferential direction.

The first main damper springs 70 and the second main damper springs 80 each made of a compression coil spring are placed alternately, over the circumferential direction, in the spring arrangement spaces 90, 90, ... formed at the six places. That is, the first main damper springs 70 are placed in spring arrangement spaces 91 in the figure, and the second main damper springs 80 are placed in spring arrangement spaces 92 in the figure. As support structures for the main damper springs 70, 80, the spring support projections 35, 43, 55 are inserted into the internal spaces of the main damper springs 70, 80, as described above. More specifically, the spring support projections 35, 43, 55 overlapping with each other are inserted into one side of the main damper spring 70, 80, and the spring support projection 43 of the intermediate tubular member 40 is inserted into the other side of the main damper spring 70, 80. Note that, in the present embodiment, the first main damper spring 70 and the second main damper spring 80 have the same spring rate.

As such, the damper springs 70, 80 are disposed in respective spring arrangement spaces 90, 90, ... each formed between the spring abutment portion 42 of the intermediate tubular member 40 and those spring abutment portions 34, 54 of the other tubular members 30, 50 which are adjacent to the spring abutment portion 42 of the intermediate tubular member 40 in the circumferential direction.

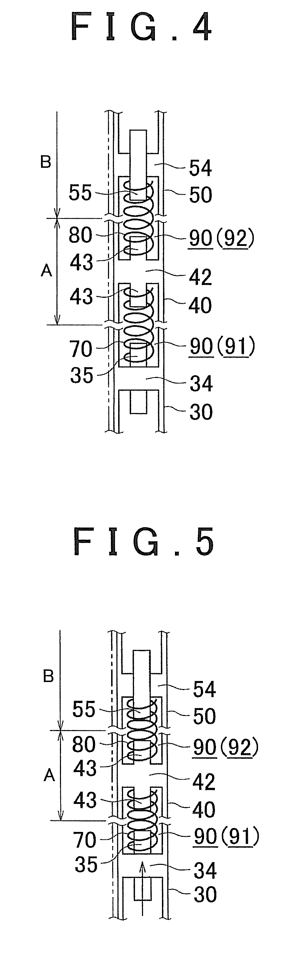

FIG. 4 is a partial developed view of the tubular members 30, 40, 50 and illustrates a state where a torque does not act on the damper device 20. Further, FIG. 5 is a partial developed view of the tubular members 30, 40, 50 and illustrates a state where a torque acts on the damper device 20. Further, FIG. 5 illustrates a state where the clutch disc 10 rotates more than the input shaft 100 of the transmission due to a torque transmitted from the engine, that is, a state where the a torsion angle by which the clutch disc 10 rotates on a positive rotation side is caused between the clutch disc 10 and the input shaft 100 of the transmission. Further, in FIGS. 4 and 5, the input-side tubular member 30 is omitted in a range A, and the input-side tubular member 30 and the intermediate tubular member 40 are omitted in a range B.

As illustrated in FIG. 5, when a torque acts on the damper device 20, the spring abutment portion 34 of the input-side tubular member 30 presses the first main damper spring 70 toward the positive rotation side (an upper side in FIG. 5). Hereby, the first main damper spring 70 elastically deforms in a compressive direction between the spring abutment portion 34 of the input-side tubular member 30 and the spring abutment portion 42 of the intermediate tubular member 40, so as to absorb a torque fluctuation. Further, that spring abutment portion 42 of the intermediate tubular member 40 which receives the torque via the main damper spring 70 presses the second main damper spring 80 toward the positive rotation side. Hereby, the second main damper spring 80 elastically deforms in a compressive direction between the spring abutment portion 42 of the intermediate tubular member 40 and the spring abutment portion 54 of the output-side tubular member 50, so as to absorb the torque fluctuation. Thus, the main damper springs 70, 80 are disposed in series in a torque transmission direction. Accordingly, a torsion angle between the clutch disc 10 and the input shaft 100 of the transmission can be taken up to a value of a sum of respective deformable amounts of the damper springs 70, 80 thus disposed in series, thereby making it possible to obtain a relatively large torsion angle. As a result, a damping characteristic with respect to torque fluctuations can be obtained successfully, thereby making it possible to absorb and damp vibrations in a torsion direction.

Further, although not illustrated herein, in a case where the input shaft 100 of the transmission rotates more than the clutch disc 10, that is, in a case where a torsion angle by which the input shaft 100 of the transmission rotates on the positive rotation side is caused between the clutch disc 10 and the input shaft 100 of the transmission (e.g., in a case where the engine enters a driven state during running (at the time of engine braking or the like)), the spring abutment portion 54 of the output-side tubular member 50 presses the first main damper spring 70 toward the positive rotation side. Hereby, the first main damper spring 70 elastically deforms in a compressive direction between the spring abutment portion 54 of the output-side tubular member 50 and the spring abutment portion 42 of the intermediate tubular member 40, so as to absorb a torque fluctuation. Further, that spring abutment portion 42 of the intermediate tubular member 40 which receives the torque via the main damper spring 70 presses the second main damper spring 80 toward the positive rotation side. Hereby, the second main damper spring 80 elastically deforms in a compressive direction between the spring abutment portion 42 of the intermediate tubular member 40 and the spring abutment portion 34 of the input-side tubular member 30, so as to absorb the torque fluctuation. Even in this case, the main damper springs 70, 80 are disposed in series in a torque transmission direction, thereby making it possible to obtain a relatively large torsion angle between the input shaft 100 of the transmission and the clutch disc 10.

As described above, in the present embodiment, the intermediate tubular member 40 is inserted into the input-side tubular member 30 and the output-side tubular member 50 is inserted into the intermediate tubular member 40, so that these tubular members 30, 40, 50 are combined so as to overlap with each other coaxially and radially. Hereby, in comparison with a configuration (a configuration in the related art) in which respective members for transmitting a torque are disposed sequentially in a direction along an axial center, the damper device 20 according to the present embodiment can shorten a linear dimension in the direction along the axial center. This makes it possible to shorten the linear dimension in the direction along the axial center as a disposition space for the damper device 20. Particularly, in a case where thickness dimensions of the spring abutment portions 34, 42, 54 of the tubular members 30, 40, 50 are set to be large in consideration that a transmission torque becomes large (a load acting on the tubular members 30, 40, 50 becomes large), only radial dimensions of the tubular members 30, 40, 50 become large, and their linear dimensions in the direction along the axial center do not become long. Consequently, it is possible to achieve an increase in a transmission torque without lengthening the linear dimension in the direction along the axial center. Further, by setting the thickness dimensions of the spring abutment portions 34, 42, 54 to be large, it is possible to shorten linear dimensions of the spring abutment portions 34, 42, 54 in the circumferential direction. This makes it possible to lengthen a linear dimension of the spring arrangement space 90 in the circumferential direction, so that a damper spring having a long linear dimension can be applied to the main damper springs 70, 80. As a result, it is possible to achieve an increase in respective deformable amounts of the damper springs 70, 80, thereby making it possible to obtain a further large torsion angle between the clutch disc 10 and the input shaft 100 of the transmission.

As such, in the present embodiment, in the damper device (so-called series-spring damper device) 20 that can obtain a large torsion angle and successfully obtain a damping characteristic with respective to torque fluctuations, it is possible to shorten the linear dimension in the direction along the axial center as a disposition space for the damper device 20.

Further, in the present embodiment, since the dynamic dampers 60 are disposed around an outer periphery of the input-side tubular member 30, it is possible to easily secure disposition spaces for the dynamic dampers 60.

Further, as described above, the inner peripheral surface of the spring support projection 35 of the input-side tubular member 30 is placed on the inner peripheral side relative to the inner peripheral surface of the spring abutment portion 34 just by the plate thickness of the spring support projection 35. Further, the outer peripheral surface of the spring support projection 55 of the output-side tubular member 50 is placed on the outer peripheral side relative to the outer peripheral surface of the spring abutment portion 54 just by the plate thickness of the spring support projection 55. Hereby, insertion positions of the spring support projections 35, 43, 55 with respect to the main damper springs 70, 80 can be set near centers of the main damper springs 70, 80. Accordingly, the spring support projections 35, 43, 55 do not cause adverse effects on elastic deformations of the main damper springs 70, 80 (the spring support projections 35, 43, 55 are hard to make contact with inner surfaces of the main damper springs 70, 80, so that they do not cause adverse effects thereon), and the spring support projections 35, 43, 55 can stably support the main damper springs 70, 80.

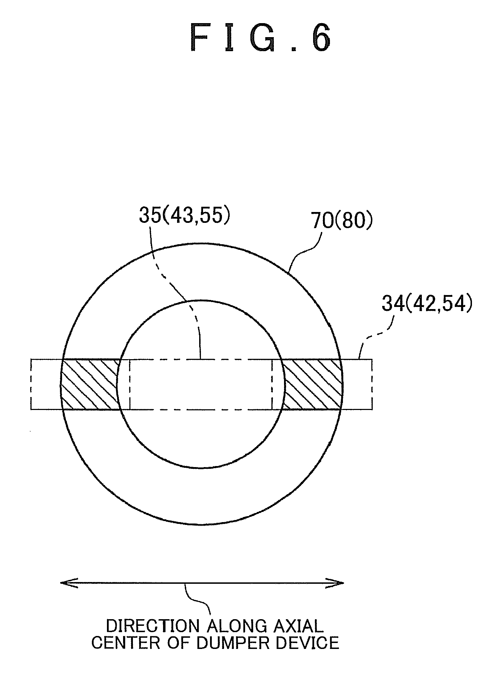

Further, as mentioned above, those edges of the spring abutment portions 34, 42, 54 of the tubular members 30, 40, 50 which are placed on both sides thereof in the circumferential direction and with which the main dumper springs 70, 80 abut extend in the direction along the axial center of the damper device 20. Further, in the present embodiment, the main damper springs 70, 80 are assembled so that the spring support projections 35, 43, 55 are inserted therein along the circumferential direction of the tubular members 30, 40, 50. Accordingly, as illustrated in FIG. 6 that illustrates an edge of the main damper spring 70, 80, the edge of the main damper spring 70, 80 in the circumferential direction abuts with the spring abutment portions 34, 42, 54, so that parts with slanted lines are pressed. Accordingly, the spring abutment portions 34, 42, 54 abut with those two places in the edge of the main damper spring 70, 80 which are equally distanced from the axial center of the damper device 20 (the axial centers of the tubular members 30, 40, 50).

Further, in the configuration of the present embodiment, the input-side tubular member 30, the intermediate tubular member 40, and the output-side tubular member 50 are decreased in diameter dimension sequentially in this order, and the intermediate tubular member 40 is inserted into the input-side tubular member 30 and the output-side tubular member 50 is inserted into the intermediate tubular member 40. Further, the clutch disc 10 is a member having a diameter larger than that of the input-side tubular member 30, and the input shaft 100 that is smaller in diameter than the output-side tubular member 50 is connected to the output-side tubular member 50. That is, those members can be arranged sequentially in an order from a member with a larger diameter to a member with a smaller diameter along a torque transmission direction from the clutch disc 10 toward the input shaft 100 of the transmission, thereby making it possible to restrain upsizing in the radial direction.

The above embodiment describes a case where the present invention is applied to the damper device 20 provided in a power transmission system of an automobile. The present invention is not limited to this, and can be applied to a damper device provided in a power transmission system of other devices.

Further, in the above embodiment, the first main damper spring 70 and the second main damper spring 80 have the same spring rate. The present invention is not limited to this, and the first main damper spring 70 and the second main damper spring 80 may have different spring rates. Further, the first main damper springs 70, 70, 70 may have different spring rates, and the second main damper springs 80, 80, 80 may have different spring rates.

Further, in the above embodiment, the input-side tubular member 30, the intermediate tubular member 40, and the output-side tubular member 50 are set to be decreased in diameter dimension sequentially in this order, so that the intermediate tubular member 40 is inserted into the input-side tubular member 30 and the output-side tubular member 50 is inserted into the intermediate tubular member 40. The present invention is not limited to this. For example, the output-side tubular member 50, the intermediate tubular member 40, and the input-side tubular member 30 may be set to be decreased in diameter dimension sequentially in this order, so that the intermediate tubular member 40 may be inserted into the output-side tubular member 50 and the input-side tubular member 30 may be inserted into the intermediate tubular member 40.

Further, the support structures for the main damper springs 70, 80 are not limited to the structures described above. For example, the spring support projections 35, 43, 55 may not be provided in all the tubular members 30, 40, 50, and only the intermediate tubular member 40 may include the spring support projections 43. Further, the main damper springs 70, 80 may be configured to be supported by a well-known resin spring sheet.

The present invention can be applied to a damper device provided in a power transmission system of an automobile and configured to absorb fluctuations in torque.

## Claims

1. A damper device (20) configured to absorb fluctuations in torque transmitted between an input-side rotational member (10) and an output-side rotational member (100), the damper device **characterized by** comprising:
an input-side tubular member (30) formed in a tubular shape, connected to the input-side rotational member (10), and provided with spring abutment portions (34) formed at a plurality of places in a circumferential direction;
an output-side tubular member (50) formed in a tubular shape, connected to the output-side rotational member (100), and provided with spring abutment portions (54) formed at a plurality of places in the circumferential direction; and
an intermediate tubular member (40) formed in a tubular shape and provided with spring abutment portions (42) formed at a plurality of places in the circumferential direction, wherein:
the tubular members (30, 40, 50) have different diameter dimensions;
the tubular members (30, 40, 50) are disposed such that the tubular member with a smaller diameter dimension is inserted into the tubular member with a larger diameter dimension, so that the spring abutment portion (42) of the intermediate tubular member (40) is placed between the spring abutment portion (34) of the input-side tubular member (30) and the spring abutment portion (54) of the output-side tubular member (50) in the circumferential direction of the tubular members (30, 40, 50); and
a damper spring (70, 80) is disposed in each spring arrangement space (90) formed between the spring abutment portion (42) of the intermediate tubular member (40) and those spring abutment portions (34, 54) of the other tubular members (30, 50) which are adjacent to the spring abutment portion (42) of the intermediate tubular member (40) in the circumferential direction.

2. The damper device (20) according to claim 1, wherein:
the tubular members (30, 40, 50) are configured such that the input-side tubular member (30), the intermediate tubular member (40), and the output-side tubular member (50) are decreased in diameter dimension sequentially in this order;
the intermediate tubular member (40) is inserted into the input-side tubular member (30) and the output-side tubular member (50) is inserted into the intermediate tubular member (40), and the input-side rotational member (10) is a member having a diameter larger than that of the input-side tubular member (30); and
the output-side rotational member is an input shaft (100) of a transmission.
